# EUROPEAN PATENT APPLICATION

(11) **EP 4 738 823 A1**
(43) Date of publication of application: **06.05.2026**
(21) Application number: 24210614.4
(22) Date of filing: 04.11.2024
(51) Int. Cl.: H04N 19/17, H04N 19/20, H04N 19/23, H04N 19/597

(54) **UPDATES OF BACKGROUND LAYERS DURING ENCODING**

(71) Applicant: Axis AB, 223 69 Lund (SE)
(72) Inventor: Stening, Johan, 223 69 Lund (SE); Yuan, Song, 223 69 LUND (SE)
(74) Representative: AWA Sweden AB

(57) **Abstract**

There is provided techniques for updating background layers during encoding of scene, performed by an image processing device. The scene is encoded based on classifying objects depicted in the scene as either foreground or background. The background is divided into ordered background layers where each background layer is associated with a respective depth model. The method comprises detecting (S102) a change in an image portion of one background layer. The method comprises calculating (S104) a difference between the image portion and a corresponding image portion of a background layer ordered behind said one background layer. The method comprises selecting (S106a), when the difference is smaller than a threshold, said background layer ordered behind said one background layer to represent the image portion.

## Description

### TECHNICAL FIELD

Embodiments presented herein relate to a method, an image processing device, a computer program, and a computer program product for updating background layers during encoding of scene.

### BACKGROUND

Depth perception is an essential aspect of understanding and interpreting the surrounding environment in various fields, particularly in applications where three-dimensional (3D) spatial information is required. The ability to accurately determine the distance, shape, and size of objects within a scene enables more precise analytics, improved object detection, and enhanced decision-making capabilities. Depth information is particularly useful in environments where distinguishing between objects based on their distance or size is critical, such as security systems, robotics, autonomous vehicles, and other systems that rely on visual data.

Traditionally, depth perception has been facilitated by 3D cameras or other specialized sensors, which provide a detailed understanding of the environment. The ability to perceive depth offers several benefits, including more accurate object detection and the ability to reduce false alarms by filtering out objects that may appear larger or closer than they actually are. For example, depth perception can help in situations where objects might be misidentified based on two-dimensional (2D) images, as depth information provides a more comprehensive view of the actual spatial relationships within a scene.

There are several methods by which depth information can be extracted. In some cases, a monocular camera system may utilize advanced computational models to estimate the depth from a single viewpoint. In other instances, depth information is derived from disparity measurements obtained from overlapping images captured by multiple sensors, such as those used in multi-sensor panoramic systems. These systems calculate the difference in the position of objects between images, enabling the determination of their relative distance. Another method involves sampling data from laser points, such as those used in Pan-Tilt-Zoom (PTZ) cameras equipped with lasers, to measure the distance of objects. Additionally, self-learning techniques based on object tracking can provide depth information by analyzing how objects move and change position over time.

While these approaches can be effective in relatively static environments, they face challenges when applied to more dynamic scenes. Each method typically requires a certain amount of time to process the data and compute accurate depth information. For example, monocular models often involve intensive computational processing, while systems relying on PTZ cameras may require time for the camera to physically sweep or pan across the scene to gather sufficient data. This delay can hinder the ability to provide real-time or near real-time depth updates, especially in scenarios where large objects are moving quickly, causing rapid changes in their depth.

In dynamic environments, where objects may move unpredictably or at varying speeds, keeping the depth perception system updated in real-time therefore becomes increasingly difficult. This challenge is particularly pronounced when large objects shift dramatically in depth, as the system may not be able to adjust quickly enough to provide accurate and up-to-date information.

Consequently, there is a need for more efficient methods of maintaining accurate depth perception, particularly in situations where both static and dynamic elements are present within a scene.

### SUMMARY

An object of embodiments herein is to address the above issues.

A particular object is to provide computationally efficient techniques for maintaining accurate depth perception in scenes with both static and dynamic elements.

According to a first aspect there is presented a method for updating background layers during encoding of scene, performed by an image processing device. The scene is encoded based on classifying objects depicted in the scene as either foreground or background. The background is divided into ordered background layers where each background layer is associated with a respective depth model. The method comprises detecting a change in an image portion of one background layer. The method comprises calculating a difference between the image portion and a corresponding image portion of a background layer ordered behind said one background layer. The method comprises selecting, when the difference is smaller than a threshold, said background layer ordered behind said one background layer to represent the image portion.

According to a second aspect there is presented an image processing device for updating background layers during encoding of scene. The scene is encoded based on classifying objects depicted in the scene as either foreground or background. The background is divided into ordered background layers where each background layer is associated with a respective depth model. The image processing device comprises processing circuitry. The processing circuitry is configured to cause the image processing device to detect a change in an image portion of one background layer. The processing circuitry is configured to cause the image processing device to calculate a difference between the image portion and a corresponding image portion of a background layer ordered behind said one background layer. The processing circuitry is configured to cause the image processing device to select, when the difference is smaller than a threshold, said background layer ordered behind said one background layer to represent the image portion.

According to a third aspect there is presented a computer program for updating background layers during encoding of scene. The scene is encoded based on classifying objects depicted in the scene as either foreground or background. The background is divided into ordered background layers where each background layer is associated with a respective depth model. The computer program comprises computer code which, when run on processing circuitry of an image processing device, causes the image processing device to perform actions. One action comprises the image processing device to detect a change in an image portion of one background layer. One action comprises the image processing device to calculate a difference between the image portion and a corresponding image portion of a background layer ordered behind said one background layer. One action comprises the image processing device to select, when the difference is smaller than a threshold, said background layer ordered behind said one background layer to represent the image portion.

According to a fourth aspect there is presented a computer program product comprising a computer program according to the third aspect and a computer readable storage medium on which the computer program is stored. The computer readable storage medium could be a non-transitory computer readable storage medium.

Advantageously, these aspects provide a structured approach to updating background layers during encoding.

Advantageously, these aspects enable efficient handling of background changes. In more detail, by detecting changes in individual image portions of the background layers and comparing them with the corresponding portions of deeper background layers, the image processing device can efficiently identify minimal changes and avoid unnecessary recalculations or updates. This selective update mechanism reduces the computational load associated with continuous recalculation of the entire scene or background, especially in static or slowly changing environments. It ensures that the image processing device only updates portions that show significant differences, optimizing both memory usage and processing power.

Advantageously, these aspects allow the use of a layered depth model for better scene representation. In more detail, the division of the background into ordered layers, each associated with a respective depth model, allows for a more granular and accurate representation of the scene's depth. Each layer represents different depth zones, facilitating a clear distinction between objects at varying distances. This approach enhances the depth perception accuracy, particularly in dynamic scenes, by maintaining more consistent and structured background data. Unlike flat depth maps or single-resolution systems, the layered approach can handle complex depth relationships with more precision, improving object classification between foreground and background.

Advantageously, these aspects can make use of threshold-based decisions for computational efficiency. The use of a threshold-based comparison to determine whether a background layer needs to be updated allows the image processing device to skip redundant updates. When the difference between two background layers is smaller than a set threshold, the deeper background layer is selected, avoiding unnecessary recalculation of the depth model. This selective updating reduces the frequency of high-computation updates, ensuring that the image processing device only processes significant changes. This optimizes both time and energy consumption, enabling the image processing device to be more computationally efficient compared to solutions that continuously compute depth data regardless of scene changes.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating an image processing device according to embodiments;
Fig. 2 schematically illustrates a foreground-background representation of a scene according to embodiments;
Fig. 3 is a flowchart of methods according to embodiments;
Fig. 4 is an illustration of a first example where a change occurs in an image portion of one background layer according to an embodiment;
Fig. 5 is an illustration of a second example where a change occurs in an image portion of one background layer according to an embodiment;
Fig. 6 is a schematic diagram showing structural units of an image processing device according to an embodiment;
Fig. 7 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As disclosed above, there is a need for more efficient methods of maintaining accurate depth perception, particularly in situations where both static and dynamic elements are present within a scene. Traditional background modeling approaches often rely on a single background depth model, which can be inefficient when processing dynamic scenes with frequent changes. To address this issue, the use of multiple background image models is proposed. Each background image model is associated with a corresponding depth model. The background image models are arranged in layers with different background merge times. The thus cascaded background depth models can be used to improve depth perception and accuracy in dynamic scene analysis.

The embodiments disclosed herein in particular relate to techniques for updating background layers during encoding of scene. In order to obtain such techniques there is provided an image processing device, a method performed by the image processing device, a computer program product comprising code, for example in the form of a computer program, that when run on an image processing device, causes the image processing device, to perform the method.

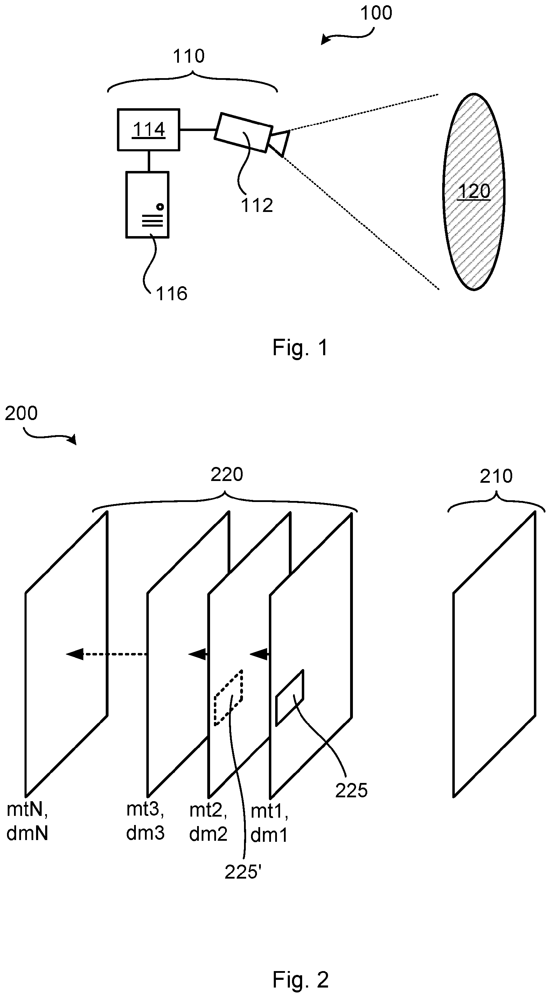

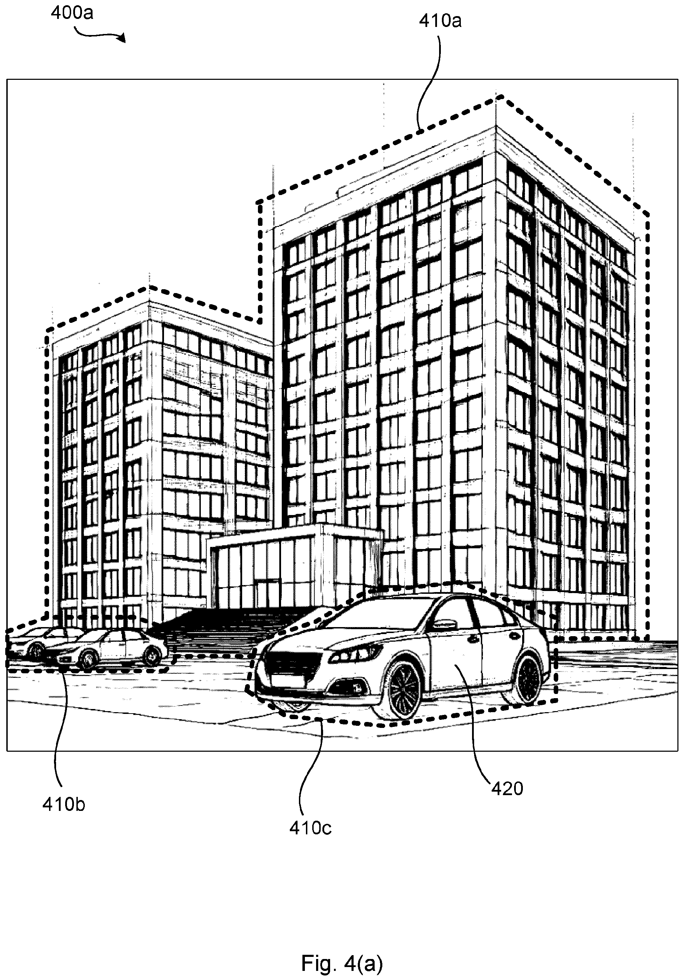

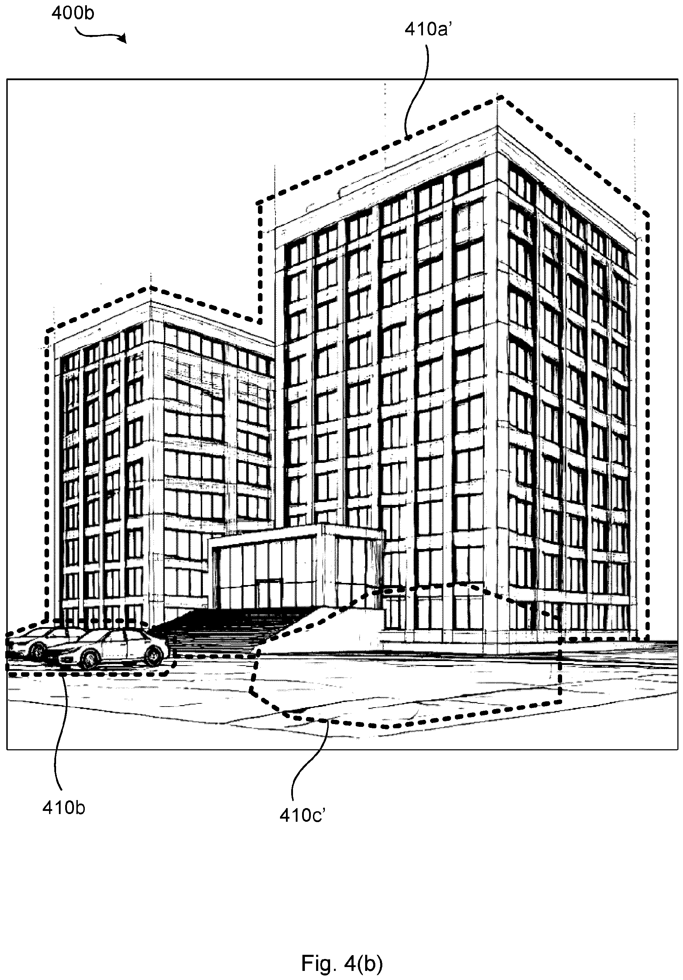

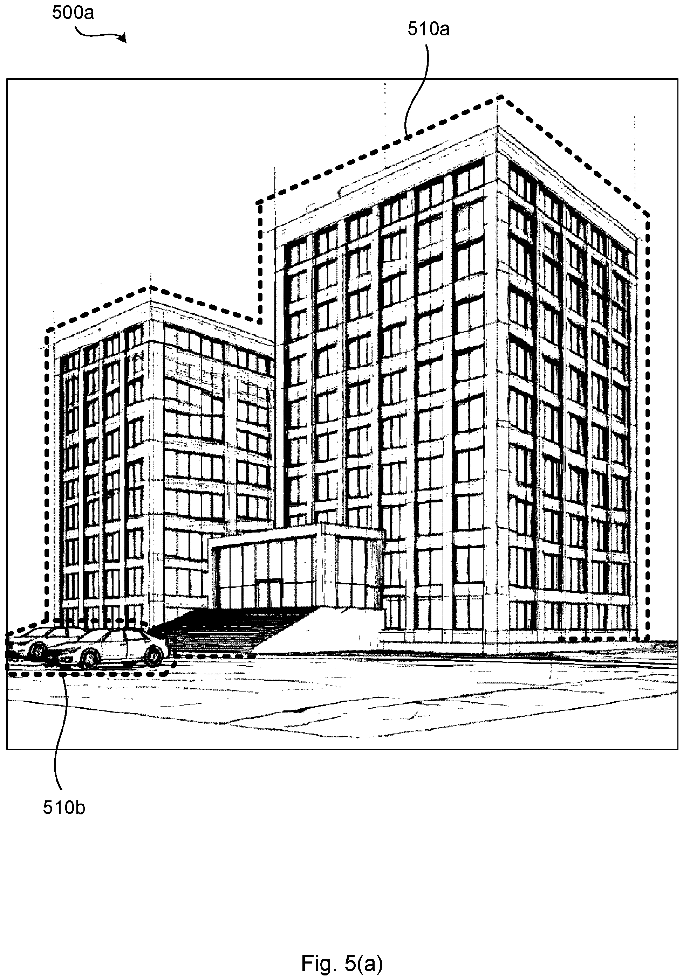

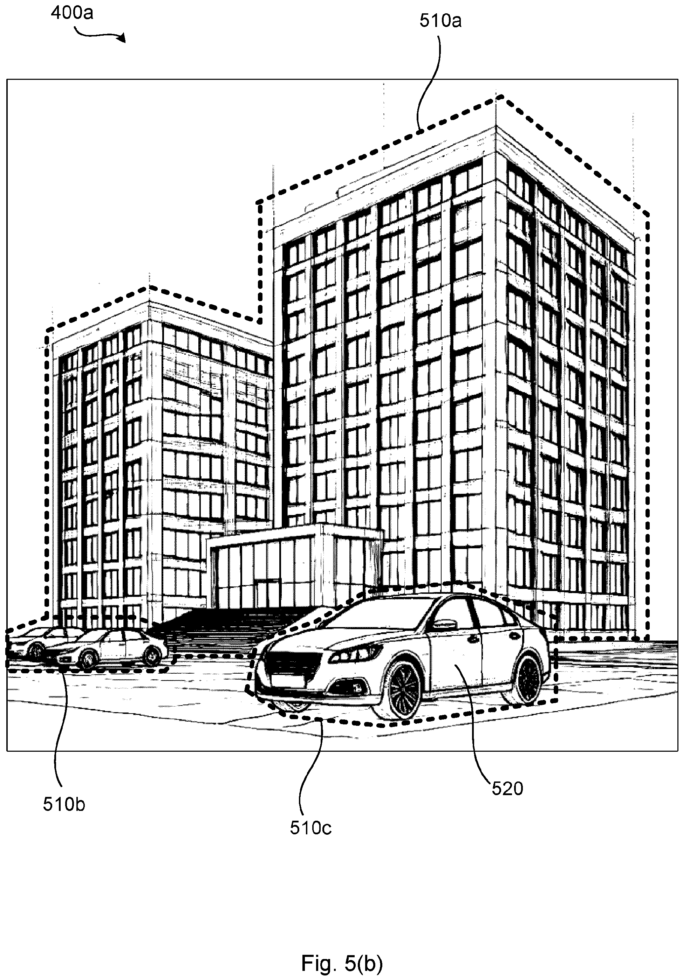

**Fig. 1** is a schematic diagram illustrating a scenario where an image processing device 110 is used for capturing video sequences of a scene 120. Different examples of scenes 120 will be provided below with reference to Figs. 4 and 5. The image processing device 110 comprises a camera device 112. The camera device 112 is configured to capture video sequences composed of image frames. In some examples the camera device 112 is a digital camera device and/or capable of pan, tilt and zoom (PTZ) and can thus be regarded as a (digital) PTZ camera device. Further, the image processing device 110 is configured to encode the image frames such that the video sequence can be decoded using any known video coding standard, such as any of: High Efficiency Video Coding (HEVC), also known as H.265 and MPEG-H Part 2; Advanced Video Coding (AVC), also known as H.264 and MPEG-4 Part 20; Versatile Video Coding (WC), also known as H.266, MPEG-I Part 3 and Future Video Coding (FVC); VP9, VP10 and AOMedia Video 2 (AV1), just to give some examples. In this respect, the encoding might be performed either directly in conjunction with the camera device 112 capturing the image frames or at another entity, such as in a dedicated image encoder 114, and then, at least temporarily, stored in a database 116, for later retrieval, decoding, and viewing.

The image processing device 110 maintains several background image models, each with a different background merge time, representing how frequently the background is expected to change. Each background image model has a corresponding depth model that reflects the depth information associated with that specific background image. An example of a foreground-background representation 200 of a scene is illustrated in **Fig. 2****.** As will be further disclosed below, the foreground-background representation can be encoded into an encoded video stream of the scene. The foreground-background representation 200 is composed of one foreground layer 210, or foreground for short, and N background layers 220, or backgrounds for short. Each background layer is associated with its own depth model, denoted dm1, dm2, dm3, ..., dmN. Hence, each image portion 225 has depth values as given by the depth model of the background layer that represents the image portion 225. Further, each background layer is associated with its own merge time, denoted mt1, mt2, mt3, ..., mtN. The representation of an object in the scene 120 can be merged into a given background layer when the object remains stationary in the scene 120 longer than the merge time of this given background layer. Hence, an object in the scene 120 will first be merged into the background layer with shortest merge time (i.e., mt1). Hence, each background layer may be associated with a respective merge time. In this respect, the background layers are order according to the merge times, with the background layer with shortest merge time closest to the foreground 210. That is, according to the notation in Fig. 2, mt1 < mt2 < mt3 < ... < mtN. In this respect, the merge time for a given background layer defines how long time it takes before the background layer ordered right in front of it is merged with this given background layer, as illustrated by the dotted line arrows in Fig. 2. Hence, a given background layer can be merged into the background layer ordered behind it after having existed longer than the merge time of the background layer ordered behind it.

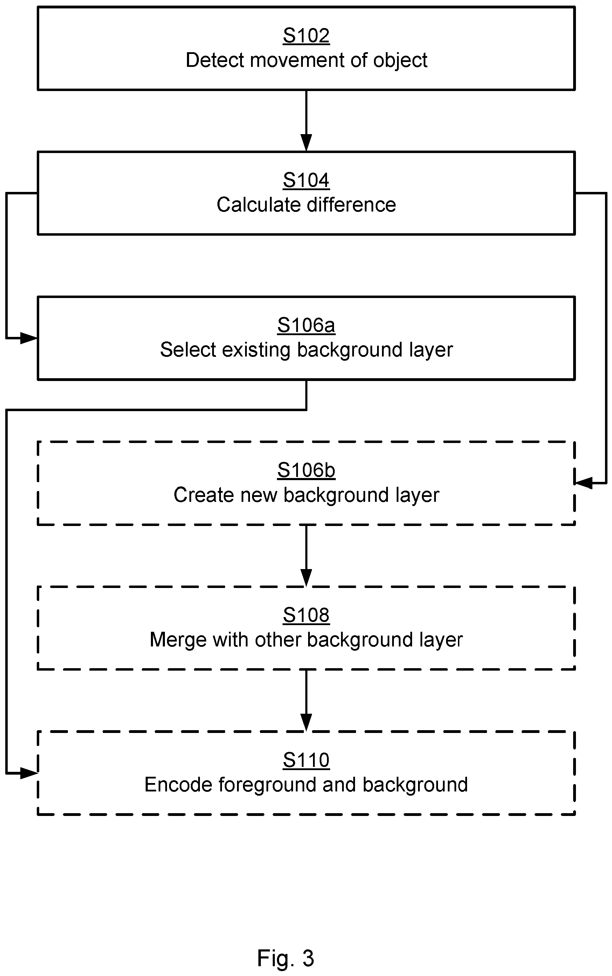

**Fig. 3** is a flowchart illustrating embodiments of methods for updating background layers 410a:410C, 510a:510C during encoding of scene 120. The scene 120 is encoded based on classifying objects 420, 520 depicted in the scene 120 as either foreground 210 or background 220, wherein the background 220 is divided into ordered background layers 410a:410C, 510a:510C where each background layer 410a:410C, 510a:510C is associated with a respective depth model, denoted dm. The methods are performed by the image processing device 110. The methods are advantageously provided as computer programs.

S102: The image processing device 110 detects a change in an image portion 225 of one background layer.

S104: The image processing device 110 calculates a difference between the image portion 225 and a corresponding image portion 225' of a background layer ordered behind this one background layer.

S106a: The image processing device 110 selects, when the difference is smaller than a threshold, the background layer ordered behind the one background layer to represent the image portion 225.

In this way, when one background layer changes (as in step S102), a check is made if the change represents a new background model or a change back to a background model of a longer merge time (as in step S104). If there is a change back to a background model of a longer merge time, the corresponding background depth model is used to update the current depth map (as in step S106a). Hence, when a change in the background occurs, the image processing device 110 first checks whether the change matches an existing background image model with a longer background merge time. This comparison can be performed using techniques like visual similarity or segmentation map comparison. One non-limiting example of how visual similarity can be used in this context is provided in "Background modeling using mixture of Gaussians and Laplacian pyramid decomposition" by Minyong Wan et al. as published in the proceedings of the 2011 International Conference of Soft Computing and Pattern Recognition (SoCPaR), DOI: 10.1109/SoCPaR.2011.6089091. If the change matches an existing model, the corresponding depth model is used to update the current depth map.

Embodiments relating to further details of updating background layers 410a:410C, 510a:510C during encoding of scene 120 as performed by the image processing device 110 will now be disclosed with continued reference to Fig. 3.

If the detected change does not match any existing background image model, the image processing device 110 treats it as a new background change. A new (partial) background image model can then be created with a different background merge time. Thus, if the change represents a new background model, then a process to create a new background depth model is triggered. Hence, in some embodiments, the image processing device 110 is configured to perform (optional) step S106b.

S106b: The image processing device 110 creates, when the difference is not smaller than the threshold, a new background layer to represent the image portion 225.

Thus, upon detecting a new background change, the image processing device 110 creates a new background depth model corresponding to the new image portion 225. This ensures that the depth map is always updated accurately in real-time, even when new background changes occur. This new background model can be treated as a temporary "branch" of the background, which remains in the image processing device 110 until further changes occur or it stabilizes as part of the background.

As time passes, if the new partial background image model remains stable, the image processing device 110 merges the new background layer with an existing background layer that has a longer merge time and a similar depth model. Hence, in some embodiments, the image processing device 110 is configured to perform (optional) step S108.

S108: The image processing device 110 merges the new background layer with the background layer ordered behind the new background layer upon expiration of a merge time associated with the background layer ordered behind the new background layer.

This process keeps the background models organized and reduces redundant data.

As disclosed above, the foreground 210 and the background layers can be encoded into an encoded video stream of the scene 120. Hence, in some embodiments, the image processing device 110 is configured to perform (optional) step S110.

Hence, in some embodiments, the image processing device 110 is configured to perform (optional) step S110.

S110: The image processing device 110 encodes the foreground 210 and the background layers into an encoded video stream of the scene 120.

Two illustrative examples where a change occurs in an image portion of one background layer will be disclose next with reference to Fig. 4 and Fig. 5. In both figures are illustrated image frames 400a, 400b, 500a, 500b depicting a scene comprising office buildings and parked vehicles, some of which are stationary and one of which is moved between different image frames.

Fig. 4(a) and Fig. 4(b) represents a scenario where a vehicle 420 leaves the scene. Starting with **Fig. 4(a)** and the image frame 400a, it is assumed that the image frame has a foreground-background representation with several background image models. As above, each background layer is associated with its own merge time. For ease of illustration, it is assumed that there are three background layers 410a, 410b, 410c. The office buildings (as well as the parking lot and the parts of the scene located behind the parked vehicles) are assumed to have been stationary the longest time and therefore belong to the background layer 410a with longest merge time. The vehicle 420 has been stationary the shortest time and therefore belongs to the background layer 410c with the shortest merge time. The remaining vehicles have been stationary longer than the vehicle 420 and therefore belong to the background layer 410b with the middle merge time. Continuing with **Fig. 4(b)** and the image frame 400b, it is assumed that the vehicle 420 has left the scene. Hence, the image processing device 110 detects a change in an image portion of background layer 410c (in Fig. 4(b) appearing as foreground layer 410c'), as in step S102, and then continues with step S104. The foreground layer 410' will be merged into the selected background layer 410a after the shortest background merge time (i.e., the time that a foreground must be merged into either a selected background layer as in step S106a or a newly created background layer as in step S106b). In the present example, this will be the background merge time of the new background layer created in step S106b). In Fig. 4(b) background layer 410a appears as background layer 410a'. In this respect, there is no need to update background layer 410a. This is since background layer 410a has always contained information about the scene also behind the vehicle 420, and this information is used during the comparison before step S106a.

Figs. 5(a) and 5(b) represents a scenario where a vehicle 520 enters the scene and becomes stationary. Starting with **Fig. 5(a)** and the image frame 500a, it is assumed that the image frame has a foreground-background representation with several background image models. As above, each background layer is associated with its own merge time. For ease of illustration, it is assumed that there are two background layers 410a, 410b. The office buildings (as well as the parking lot and the parts of the scene located behind the parked vehicles) are assumed to have been stationary the longest time and therefore belong to the background layer 510a with longest merge time. The vehicles have been stationary the shortest time and therefore belongs to the background layer 510b with a merge time being shorter than for background layer 510a. Continuing with **Fig. 5(b)** and the image frame 500b, it is assumed that a vehicle 520 has entered the scene and has become stationary. Hence, the image processing device 110 detects a change in an image portion of background layer 510a, as in step S102, and then continues with step S104. Since the image portion in background layer 510a where the vehicle 520 is located does not corresponds to any image portion in any other background layer, a new background layer 510c can be created, as in step S106b. This new background layer 510c has a shorter merge time than background layer 510b.

The described methods ensure that the depth map is updated with minimal latency, enabling the image processing device 110 to quickly respond to changes in the scene. As will be explained next, this enables the image processing device 110 to adjust focus, optimize the stitching distance, refine analytics rules, and improve geospatial awareness. With respect to adjusting focus, the image processing device 110 can dynamically adjust the focus based on updated depth information, keeping objects of interest in focus. With respect to optimizing the stitching distance, in panoramic or multi-camera scenarios, accurate depth information improves stitching between camera feeds. With respect to refining analytics rules, the updated depth maps can enhance object detection and classification, thus reducing false alarms. With respect to improving geospatial awareness, the image processing device 110 can integrate global positioning system (GPS) overlays with updated depth maps, enhancing camera positioning and scene understanding. In this respect, the images as captured by the camera 112 may be geo-tagged. For example, location information can be provided by means of a metadata tag in exchangeable image file format (Exif) data. In this way, the camera 112 can provided as output not only the pixel positions of detected objects, but also the GPS coordinates of the detected objects. By managing cascaded background depth models, this method supports more efficient real-time image processing in dynamic scenes.

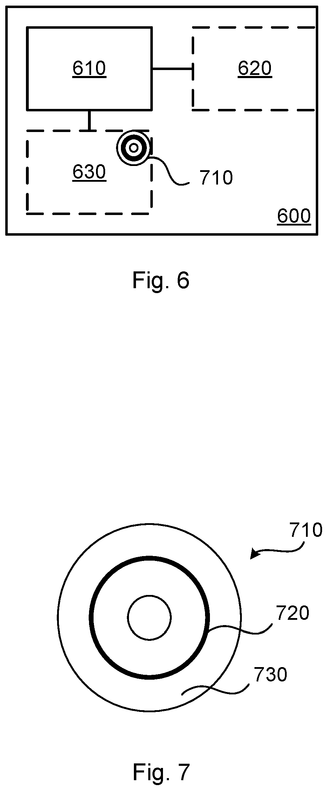

**Fig. 6** schematically illustrates, in terms of a number of structural units, the components of an image processing device 600 according to an embodiment. Processing circuitry 610 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 630. The processing circuitry 610 may further be provided as at least one application specific integrated circuit (ASIC), or field programmable gate array (FPGA).

Particularly, the processing circuitry 610 is configured to cause the image processing device 600 to perform a set of operations, or steps, as disclosed above. For example, the storage medium 630 may store the set of operations, and the processing circuitry 610 may be configured to retrieve the set of operations from the storage medium 630 to cause the image processing device 600 to perform the set of operations. The set of operations may be provided as a set of executable instructions.

Thus, the processing circuitry 610 is thereby arranged to execute methods as herein disclosed. The storage medium 630 may also comprise persistent storage, which, for example, can be any single one or combination of magnetic memory, optical memory, solid state memory or even remotely mounted memory. The image processing device 600 may further comprise a communications (comm.) interface 620 at least configured for communications with other entities, functions, nodes, and devices. As such the communications interface 620 may comprise one or more transmitters and receivers, comprising analogue and digital components. The processing circuitry 610 controls the general operation of the image processing device 600 e.g. by sending data and control signals to the communications interface 620 and the storage medium 630, by receiving data and reports from the communications interface 620, and by retrieving data and instructions from the storage medium 630. Other components, as well as the related functionality, of the image processing device 600 are omitted in order not to obscure the concepts presented herein.

The image processing device 110, 600 may be provided as a standalone device or as a part of at least one further device. Thus, a first portion of the instructions performed by the image processing device 110, 600 may be executed in a first device, and a second portion of the of the instructions performed by the image processing device 110, 600 may be executed in a second device; the herein disclosed embodiments are not limited to any particular number of devices on which the instructions performed by the image processing device 110, 600 may be executed. Hence, the methods according to the herein disclosed embodiments are suitable to be performed by an image processing device 110, 600 residing in a cloud computational environment. Therefore, although a single processing circuitry 610 is illustrated in Fig. 6 the processing circuitry 610 may be distributed among a plurality of devices, or nodes. The same applies to the computer program 720 of Fig. 7.

**Fig. 7** shows one example of a computer program product 710 comprising computer readable storage medium 730. On this computer readable storage medium 730, a computer program 720 can be stored, which computer program 720 can cause the processing circuitry 610 and thereto operatively coupled entities and devices, such as the communications interface 620 and the storage medium 630, to execute methods according to embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for updating background layers (410a:410c, 510a:510c) during encoding of scene (120), performed by an image processing device (no, 600), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), and wherein the method comprises:
detecting (S102) a change in an image portion (225) of one background layer;
calculating (S104) a difference between the image portion (225) and a corresponding image portion (225) of a background layer ordered behind said one background layer; and
selecting (Sio6a), when the difference is smaller than a threshold, said background layer ordered behind said one background layer to represent the image portion (225).

2. The method according to claim 1, wherein the method further comprises:
creating (S106b), when the difference is not smaller than the threshold, a new background layer to represent the image portion (225).

3. The method according to claim 2, wherein the method further comprises:
merging (S108) the new background layer with the background layer ordered behind the new background layer upon expiration of a merge time (mt) associated with the background layer ordered behind the new background layer.

4. The method according to any preceding claim, wherein each background layer is associated with a respective merge time (mt).

5. The method according to claim 4, wherein representation of an object (420, 520) in the scene (120) is merged into a given background layer when the object (420, 520) remains stationary in the scene (120) longer than the merge time (mt) of said given background layer.

6. The method according to a combination of claims 3, 4, or 5 wherein a given background layer is merged into the background layer ordered behind it after having existed longer than the merge time (mt) of said background layer ordered behind it.

7. The method according to any preceding claim, wherein the background layers (410a:410c, 510a:510c) are ordered by merge time (mt), with the background layer with shortest merge time (mt) closest to the foreground (210).

8. The method according to any preceding claim, wherein the image portion (225) has depth values as given by the depth model (dm) of the background layer (410a:410c, 510a:510c) that represents the image portion (225).

9. The method according to any preceding claim, wherein the method further comprises:
encoding (S110) the foreground (210) and the background layers (410a:410c, 510a:510c) into an encoded video stream of the scene (120).

10. An image processing device (no, 600) for updating background layers (410a:410c, 510a:510c) during encoding of scene (120), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), the image processing device (no, 600) comprising processing circuitry (610), the processing circuitry being configured to cause the image processing device (no, 600) to:
detect a change in an image portion (225) of one background layer;
calculate a difference between the image portion (225) and a corresponding image portion (225) of a background layer ordered behind said one background layer; and
select, when the difference is smaller than a threshold, said background layer ordered behind said one background layer to represent the image portion (225).

11. The image processing device (no, 600) according to claim 10, further being configured to perform the method according to any of claims 2 to 9.

12. A computer program (720) for updating background layers (410a:410c, 510a:510c) during encoding of scene (120), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), the computer program comprising computer code which, when run on processing circuitry (610) of an image processing device (no, 600), causes the image processing device (no, 600) to:
detect (S102) a change in an image portion (225) of one background layer;
calculate (S104) a difference between the image portion (225) and a corresponding image portion (225) of a background layer ordered behind said one background layer; and
select (S106a), when the difference is smaller than a threshold, said background layer ordered behind said one background layer to represent the image portion (225).

13. A computer program product (710) comprising a computer program (720) according to claim 12, and a computer readable storage medium (730) on which the computer program is stored.

## Amended claims

### Amended claims in accordance with Rule 137(2) EPC.

1. A method for updating background layers (410a:410c, 510a:510c) during encoding of scene (120), performed by an image processing device (110, 600), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), and wherein the method comprises:
detecting (S102) a change in an image portion (225) of one background layer;
calculating (S104) a difference between the image portion (225) and a corresponding image portion (225) of a background layer ordered behind said one background layer;
selecting (S106a), when the difference is smaller than a threshold, said background layer ordered behind said one background layer to represent the image portion (225); and
creating (S106b), when the difference is not smaller than the threshold, a new background layer to represent the image portion (225).

2. The method according to claim 1, wherein the method further comprises:
merging (S108) the new background layer with the background layer ordered behind the new background layer upon expiration of a merge time (mt) associated with the background layer ordered behind the new background layer.

3. The method according to any preceding claim, wherein each background layer is associated with a respective merge time (mt).

4. The method according to claim 3, wherein representation of an object (420, 520) in the scene (120) is merged into a given background layer when the object (420, 520) remains stationary in the scene (120) longer than the merge time (mt) of said given background layer.

5. The method according to a combination of claims 2, 3, or 4 wherein a given background layer is merged into the background layer ordered behind it after having existed longer than the merge time (mt) of said background layer ordered behind it.

6. The method according to any preceding claim, wherein the background layers (410a:410c, 510a:510c) are ordered by merge time (mt), with the background layer with shortest merge time (mt) closest to the foreground (210).

7. The method according to any preceding claim, wherein the image portion (225) has depth values as given by the depth model (dm) of the background layer (410a:410c, 510a:510c) that represents the image portion (225).

8. The method according to any preceding claim, wherein the method further comprises:
encoding (S110) the foreground (210) and the background layers (410a:410c, 510a:510c) into an encoded video stream of the scene (120).

9. An image processing device (110, 600) for updating background layers (410a:410c, 510a:510c) during encoding of scene (120), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), the image processing device (110, 600) comprising processing circuitry (610), the processing circuitry being configured to cause the image processing device (110, 600) to:
detect a change in an image portion (225) of one background layer;
calculate a difference between the image portion (225) and a corresponding image portion (225) of a background layer ordered behind said one background layer;
select, when the difference is smaller than a threshold, said background layer ordered behind said one background layer to represent the image portion (225) ; and
create, when the difference is not smaller than the threshold, a new background layer to represent the image portion (225).

10. The image processing device (110, 600) according to claim 10, further being configured to perform the method according to any of claims 2 to 8.

11. A computer program (720) for updating background layers (410a:410c, 510a:510c) during encoding of scene (120), wherein the scene (120) is encoded based on classifying objects (420, 520) depicted in the scene (120) as either foreground (210) or background (220), wherein the background (220) is divided into ordered background layers (410a:410c, 510a:510c) where each background layer (410a:410c, 510a:510c) is associated with a respective depth model (dm), the computer program comprising computer code which, when run on processing circuitry (610) of an image processing device (110, 600), causes the image processing device (110, 600) to:
detect (S102) a change in an image portion (225) of one background layer;
calculate (S104) a difference between the image portion (225) and a corresponding image portion (225) of a background layer ordered behind said one background layer;
select (S106a), when the difference is smaller than a threshold, said background layer ordered behind said one background layer to represent the image portion (225); and
create (S106b), when the difference is not smaller than the threshold, a new background layer to represent the image portion (225).

12. A computer program product (710) comprising a computer program (720) according to claim 11, and a computer readable storage medium (730) on which the computer program is stored.
